# EUROPEAN PATENT SPECIFICATION

(11) **EP 1 555 799 B1**
(45) Date of publication and mention of the grant of the patent: **26.07.2006**
(21) Application number: 04000736.1
(22) Date of filing: 15.01.2004
(51) Int. Cl.: H04M 3/533

(54) **Instant voice output in a communications environment**
Instantane Sprachausgabe in einer Kommunikationsumgebung
Sortie vocale instantanée dans un environnement de communication

(43) Date of publication of application: 20.07.2005
(73) Proprietor: Combots Product GmbH & Co.KG, 76227 Karlsruhe (DE)
(72) Inventor: Greve, Michael, 76227 Karlsruhe (DE); Cotte, Pierre-Alain, 76227 Karlsruhe (DE); Greve, Matthias c/o WEB.DE AG, D-76227 Karlsruhe (DE)
(74) Representative: DTS München

(56) References cited:
- WO-A-01/35615
- US-A- 5 848 134
- US-A1- 2002 125 993
- US-A1- 2003 215 065

## Description

### Field of the invention

In general, the present invention relates to a communications environment for an end user unit communicating via the communications environment and related systems, devices, units and methods for communications purposes. In particular the invention as realized according to the preferred embodiments relates to communications capable of integrating various communications systems, such as computer-based networks, the Internet, PSTN, UMTS and the like wherein all communications from and to the end user unit are executed via a single, integrated telecommunications website (TCW). In this context, a TCW is to be understood as a general-purpose communications interface, which allows direct and private communication between the involved parties.

### Background of the invention

In US 5,848,134 a system server converts a message from terminals of a plurality of different media in disclosed such as a computer and telephone, into data respectively compatible with the telephone and the computer, and then such the data to the telephone and the computer, respectively.

In US 2002/0125993 A1 a method for delivering an audio and/or video message to an individual is disclosed.

In Plain Old Telephone Systems (POTS) voice communication is established via switching devices, such as PABX or PBX, by analog and/or digital transmission from a first end user unit, i.e. the phone of a calling party A, to a second end user unit, i.e. the phone of the called party B. Moreover conference calls can be established from the calling A party to a plurality of B parties. Before starting that voice communication a line from the end user unit of A to the end user unit of B has to be switched. To do this, the called party B has to accept and answer the call by lifting the receiver, i.e. by going off hook. Otherwise the calling party A will not reach him, a situation, which at any rate will occur when B is not in. Thus, A can only deliver its message to B if B performs the actions needed to establish the communication line. Accordingly, with POTS A has in general no means of delivering an instantaneous and automatic message to B, i.e. a message that reaches B without the need for any action by B. Of course, there are also devices, such as answering machines or the like, which are able to automatically play back via a loud speaker a message that is being left. However, these machines can only be integrated into POTS and not into computer based networks. Furthermore, these machines constitute a further piece of equipment that has to be especially bought, installed and serviced and that takes up space.

From more sophisticated communication systems, such as ISDN, GSM or UMTS it is known to provide subscriber services to let the A party leave a message, e.g. text or voice message, in the mail box of the B party. In this respect those communications environments with PSTN gateways and IP routing means, which are interworking with the Internet or Intranet shall be mentioned. Such a communications environment is described in a valuable contribution to the prior art in WO 03/094468 A2 to provide among many versatile communications services also the VoIP service, which means a service for transmitting voice data packet by using the IP protocol. In this context it is known to send voice messages or even multimedia messages to a memory esp. a mailbox for being retrieved later by the called party.

However, this mailbox service is not an option for a user who wants the intended message to reach the called party immediately or wants to make him aware via the message just in time when something is happening. Indeed, with such a mailbox service, the voice message is stored in the mailbox and will merely reach its recipient when said recipient actively retrieves the message from the mailbox.

Accordingly, with the presently known services (POTS, ISDN, GSM, UMTS, etc.) it is only possible for a user to reach a called party with a voice message instantly and automatically if the called party has a supplemental, separate device, such as an answering machine with a loudspeaker. If the intended recipient does not own such a device he must in all cases first perform certain actions (e.g. pushing a button, lifting a telephone receiver, etc.) before the voice message may reach him. Furthermore, these known answering machines cannot be integrated into computer-based networks. Hence, if the called party is only reachable via a computer-based network, e.g. via a PC connected to such a network, there is no possibility of reaching him via an instantaneous and automatic voice message.

### Object of the invention

In general, the object of the invention is to provide immediate access to an end user unit, especially a computer-based end unit, of the B party or even to a plurality of such units for instant and automatic notification.

A further object of the invention is to provide at the place of the end user A who is the calling party a more convenient and interoperable use of his terminal equipment, in particular to commonly use his PSTN phone and his PC, both terminals being inter-connected via a telecommunication website.

### description of the invention

The above object is achieved by a communications system according to claim 1 and interacting means according to claim 18 and an end user unit according to claim 19 and a method according to claim 20.

A communications environment may be a communications system comprising more than one component, i.e., more than one device and/or type of device, media and/or type of media, network and/or type of network. Thus, a communications environment or communications system might for instance comprise a telephone, communication lines such as telephone cables, a whole PSTN-network, a gateway to the internet, a Local Area Network (LAN) between computer terminals etc.

In the context of the invention, a telecommunications network may be any group of interconnected telecommunication devices, which is used essentially for voice communication. Such a telecommunications network is thus primarily designed to transmit voice and audio signals and no other data or signal formats. The interchanged voice signals may be of analog or digital form. Such telecommunications networks may comprise, for example, regular PSTN telephone networks, mobile communications networks, radio transmission networks, etc. The telecommunications network may be a private, public or corporate network.

A voice telecom service may be any service by which the actual voice of an individual or the voices of a group of individuals is/are communicated via a telecommunications network to a recipient that is separated by a certain physical distance from the place of generation of the voice(s). Such a service is for example the establishment of a PSTN or mobile telephone connection, the provision of a satellite or radio communication link, etc.

An end user unit is preferably a device which can be used for communications. The end user unit may be a telephone, a conference telephone in which more than one person can speak simultaneously, a keyboard, a computer terminal, a mobile phone, a fax, a telex, a mail pigeon, an ordinary letter, a scanner, a PSTN device, a 3G-wireless communications device, especially a UMTS device, etc. Moreover, the end user unit may be another telecommunications web site, a telecommunications portal comprising more than one telecommunications web sites or a device using a browser-based application.

The end user unit may include a user interface device and a network interface device. The user interface device provides for user input and/or output. The user interface device may be a telephone, a keyboard, a computer terminal, and/or a mobile communications device, for example. The network interface device may be a V.42, V.90, V.92 modem, a personal computer memory card international association (PCMCIA) modem, a digital subscriber line (DSL) modem, an integrated service digital network (ISDN) adapter, a cable modem, a wireless modem, an ethernet card, or an integrated modem of a mobile phone, for example. The end user unit is not limited to a particular communications unit/ device or any communications network. Rather, the end user unit may enable communications via any communications network such as regular telephone networks, mobile communications networks, computer networks, radio transmission networks, the Internet, etc. Further, the first end user unit is not restricted to single devices, but can also include two and more units, devices, and the like providing data/information sending and/or receiving capabilities for communications purposes, e.g., an ordinary letter and a scanner.

The end user unit is preferably adapted to perform network-based communications. Thus, the end user unit is connectable to a network and able to communicate with a network. Thus, data information can be processed in a network. A network in this context may be a physical transport medium in which data and/or signal can be fed. For example, an ordinary letter itself is adapted to perform network-based communication when scanned or digitized and supplied into a transmission control protocol/internet protocol (TCP/IP) network.

Examples for end user units include any device, unit or means, which can be used for communications. Preferred end user units comprise stationary and mobile telephones (e.g. PSTN telephones, 2G and 3G devices, GSM and UMTS telephones), stationary and mobile computer systems and devices and units and the like providing data/information sending and/or receiving capabilities for communications purposes.

In this context, parties are contemplated to include users or owners (e.g. a single person, a company) of communications systems (e. g. computer systems, Internet servers, service providers, e-mail servers, telephone systems, SMS systems), addresses (e.g. IP addresses, telephone numbers, e-mail addresses, websites, Internet links, SMS addresses, postal addresses), locations (e. g. building of a company), end user units (e. g. personal computer, telephones, SMS devices) etc. Preferably, a calling and/or a receiving party is an individual, a group of individuals or a company, to which at least one end user unit is associated to.

The communications offering party, i.e. the calling party, can be, for example, a company or an individual that wants to offer, enable and/or remind an entity, such as a person, to communicate. The target entity, i.e. the called party, can be, e.g., a company or an individual of a group of individuals or companies that is/are, from the communications offering party's point of view, a "target" or desired party, which should be allowed to passively communicate within a framework set up by the communications offering party.

A data network is understood to be any group of interconnected communication devices, where the devices, in contrast to a telecommunications network, are able to interchange any form of data such as audio, visual, multimedia or other data. The interconnected devices may be Personal Computers and/or laptops and/or notebooks and/or Personal Digital Assistants (PDAs), etc.. The interchanged data may be of analog or digital form. Furthermore, the data network may preferably be an Internet protocol based data network, in particular a public and/or IP network, a LAN, WAN, WLAN, etc.. The data network may be a private, public or corporate network.

A voice data service may be any service by which voice data is communicated via a data network from one physical location to another. The provision of the voice data service may comprise the provision of the data network, the provision of the corresponding devices or terminals, the provision of software or programs, etc. Preferably, the voice data service is a service comprising voice over ip (VoIP).

A data terminal can be any end or terminal device through which a user may use and enter a data network. A data terminal is part of the data network and may be used for the input our output of data into or out of the data network. Examples for data terminals are computers, workstations, etc.

Interworking means according to the invention refer to means allowing to communicate between both the telecommunications network and the data network. Preferably, the interworking means comprises a telecommunications website being configured for providing the communications, upon accessing of the web site by the calling party, the calling party having access to a terminal being connected to said website.

Preferably, the interworking means are a telecommunications web site as described in WO03/094427. Herein, a communications environment is described, comprising a first end user unit (used by a calling party) being adapted to perform network-based communications, and a web site including at least one web page, wherein the web site is a telecommunications web site (TCW) corresponding to a specific entity, and the telecommunications web site is adapted to provide, upon an access by the first end user unit, for private communications between the calling party using the first end user unit and the specific entity (preferably using the TCW). Thus a way of communications is disclosed where a specific entity or person can be contacted via a web site providing private communications between a caller (calling party) and the host of this telecommunications web site. In standard internet communication without a TCW, the parties do not communicate via a personalized web site; rather, web sites are used to simply administrate communication options.

The terms "web site" and "web page" define sites and sub-sites associated thereto which can be uniquely addressed by means of a single address, like a telephone number or an IP address, a uniform resource locator (URL), etc. It is also advantageous to use such a "web site" in a 3G-communication environment, especially an UMTS-environment. Preferably, such a web site is a site known from the Internet with a specific URL, which can be accessed by Internet visitors, and by the web site host. The web site host may be the owner of the web site.

A web site can include one or more web pages. These web pages are part of the one web site. It should be noted that the terms "web site" and "web page" are not to be considered to limit the present invention to conventional web sites and WebPages known from the Internet. Thus, the web site and its web page(s), respectively, can be accessed by establishing a communications link from the first end user unit independently of the network(s) employed.

A telecommunications web site may be a web site adapted to provide, upon an access event, for private communications between two entities, as further discussed below. Preferably, the telecommunications web site corresponds to a first specific entity and is adapted to provide, upon an access by the first end user unit, for private communications between the first end user unit and the first specific entity. The terms "telecommunications web site" and "web site" may be understood to encompass software and hardware components effecting the site. Such components may include one or more processors, for example.

A telecommunications web site is preferably assigned to or personalized for or corresponding to a specific person or entity. Such a first specific entity can be a person, a company or any other entity. The specific entity preferably acts as the host of the telecommunication web site. The specific entity may be a single entity, e.g., a specific user or owner (e.g., a single person, a company, a unit of a company, etc.) of the telecommunications web site, a specific address, a specific location, a specific end user unit and the like.

The interworking means such as a telecommunications web site has gateway functions for inter-connecting said networks, i.e. provides communication between the two networks via combinations of different types of communication links or paths. These different links may be part of either of the two networks. The different links may be accessed by using different end user units. Thanks to the interworking means it is possible to exchange information between the two networks.

The interworking means acts like a doorway or gateway between the two networks, allowing an information transfer between one and the other.

The controlling functions of the interworking means may comprise the establishment and monitoring of a connection between the two networks, the interfacing of the networks, etc.. In particular, the interworking means ensures the translation of the voice signal from the telecommunications network into voice data for transferral to the data network. The controlling functions may be carried out by software or hardware components or both.

A voice signal is understood as a signal representation of a voice that can propagate in a telecommunications network. Typical voice signals are e.g. an analogue electric signal in a telephone line or a radio signal or a mobile phone signal.

Voice data on the other hand may be any data format, which comprises audio data and is used to communicate voice in a data network. Voice data may be for example an mp3-file or a wav-file.

Data processing means may be any form of hardware and/or software by which the second end user unit is capable of outputting said voice data. The data processing means may comprise a hardware element to receive and sustain the voice data, a software element to control the transmission of the voice data and to convert the voice data, a hardware to output the voice data, etc.. A typical data processing means may be an input port of a network card of a personal computer with the associated software, a software program that is able to play back audio data or other similar hard- or software.

The described data processing means according to the invention are capable of automatically as well as instantly outputting the voice data. This means that the voice data that reaches the second end user unit is processed and delivered to the recipient directly and immediately. The voice data is preferably received, converted and outputted in a single continuous process. This process happens automatically without any needed action or intervention by the recipient. The called party receives the message in real-time without delay and does not get any opportunity to interrupt the deliverance of the voice message.

The audio device used to output the voice data may be any device, which is able to convert voice data into audible speech. Typical audio devices may be in particular a loudspeaker, a headset or an audio port. In the case of a headset the audio data can be delivered personally and privately to the recipient such that there is no possibility for third parties of eavesdropping. On the other hand, a person using often a headset will be able to hear the audio output whereas the ringing of a telephone might be difficult to be heard.

In a preferred embodiment of the invention, the second end user unit is a client of the data network, in particular a personal computer or a data terminal having an audio device.

A client of the data network may be any device that uses the data network to exchange information with other devices of the network.

In the communications environment of the present invention the voice signal may preferably be converted into a VoIP data stream or integrated into a multimedia data stream and transmitted to the second end user unit.

A Voice over IP (VoIP) data stream may be any voice data, which is sent over Internet Protocol (IP) connections. A voice data stream may for example be the voice data from a telephone conversation that is carried out via the Internet and not via the PSTN-nework.

A Multimedia data stream may comprise any data stream, which contains more than one data format. A multimedia data stream may contain voice data together with other audio data, visual data, text data, etc..

Preferably, the client/second end user unit may process a software program or application, which instantly presents the content of the VoiP or multimedia data stream to the called party.

A software program may be any form of process running on hardware such as a PC.

Preferably, said program being processed by the client for instantly presenting/outputting said content may be a web browser (or part of it such as a "plug in module" etc.) or a communications software as for instance telecommunication web site or an email application or a screen saver program, as for instance described in WO 03/094428, etc.

In a further preferable embodiment of the inventive communications environment, at the telecommunications network, the calling party requests an instant voice output service, in particular calls a service number associated to said service, the processing of the service being controlled by the interworking means for outputting the corresponding voice data instantly at the second end user unit.

An instant voice output service may be any service, which allows the instant voice output according to the present invention.

Furthermore, in order to allow the calling party to reach more than one party, the second end user unit may preferably be a plurality of second end user units being associated to a plurality of corresponding called parties.

A plurality of second end user units may be several single end user units or several groups of end user units. Preferably, the end user unit is used by one or more persons, i.e. called parties.

In a further preferred embodiment of the present invention said voice signal from said first end user unit is a telephone conversation with a third party or a duplex telephone conference with several third parties. Thus, it is possible to arrange that person B overhears a telephone conservation between a calling party A and a third party C.

In this context, a telephone conversation may be a conversation via telephone between the calling party and a different party from the called party, which is being transmitted as said voice data to the called party. The telephone conversation is outputted to the called party and the called party may listen to the conversation but may not take part in it.

Similarly, the calling party may have a duplex (bi-directional) telephone conference with third parties, which is transmitted as voice data to the called party and may be listened to by the latter.

In a situation where said voice signal is a duplex telephone conference, the interworking means may preferably be transmitting to the at least one second end user unit of the at least one corresponding party voice data which is corresponding to all voice signals or data being communicated within the conference call between the corresponding parties.

In a further preferable embodiment, both end users having units being connected to the telecommunications network and having data terminals being connected to the data network, the interworking means may control a bi-directional communication in that voice from the first user is instantly outputted at the terminal of the second user and vice versa.

In this case, both parties are at the same time calling and being called and may have a normal real-time conversation with the help of each of their units and data terminals, the delivery of the conversation being managed by the interworking means.

In still a further preferable embodiment the first end user unit may be a PSTN end user unit, in particular a telephone device being associated to the calling party and an end user IP network terminal, in particular a PC, is also associated to the calling party. In this case, the voice signal sent from the first end user unit of the calling party is converted into and transmitted as voice data to his/her own IP network terminal (PC) and processed there instead of or in addition to being output at the second end user unit of the called party.

Accordingly, the calling party may send voice data via its telephone to his own PC instead of to the PC of a different party. In such a way the calling party may use its telephone together with its PC as a digital voice recorder or a dictation device. Accordingly, the calling party does not need a further separate device for dictation or voice recording.

The interworking means for use in a communications environment according to the present invention may preferably comprise a gateway for inter-connecting telecommunications and data networks, and a control element for controlling at least voice communication from a first end user unit to a second end user unit. In this case, a voice signal sent from a first end user unit is converted into and transmitted as voice data to a second end user unit.

The end user unit for use for a second user according to the present invention may preferably comprise data processing means for receiving and automatically as well as instantly outputting voice data at an audio device of that end user unit.

The aforementioned object of the present invention is also achieved by a method of transmitting voice signals from a first end user unit associated to a first user as sender connected to a PSTN-network to a second end user unit associated to a second user as receiving party connected to a data network comprising the steps of
receiving the voice signal of the first user by a first end user unit;
converting the voice signal to a voice data stream;
sending the voice data stream to the second end user unit of the second user;
initiating the output of the voice data at the second end user unit without the second end user initiating the output of said voice data.

In particular, according to the inventive method, the output of the voice data at the second end user unit of the second user may preferably be repeated when the second user is detected by the second end user unit.

The repetition may be predetermined by the calling party and/or the called party and take place once or several times in order to remind the second user more often. The second user may be detected through his usage of his end user unit such as moving the mouse-cursor as striking the keyboard or via separate sensors like temperature, movement, light, cameras or other sensors.

### Short description of the figures

The following description of the invention and of its preferred embodiments is referred to the accompanying drawings, wherein:

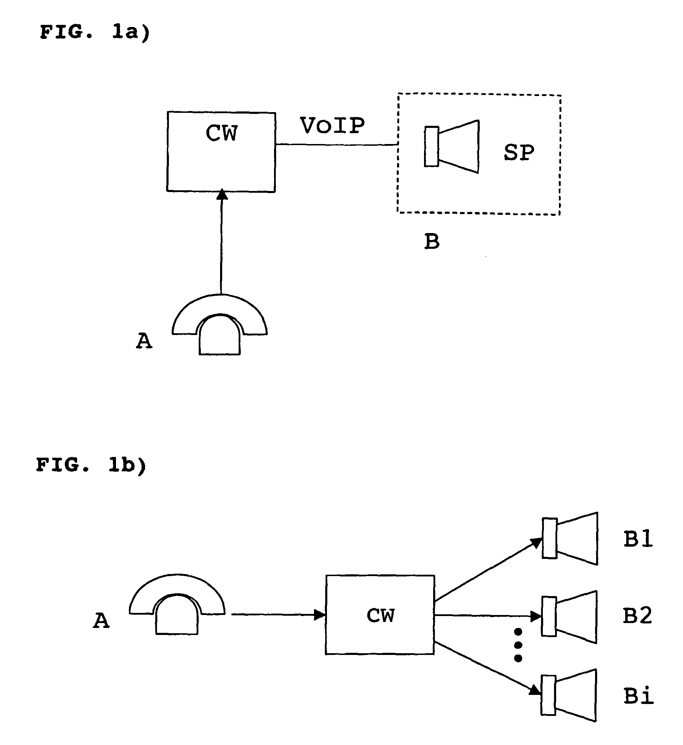

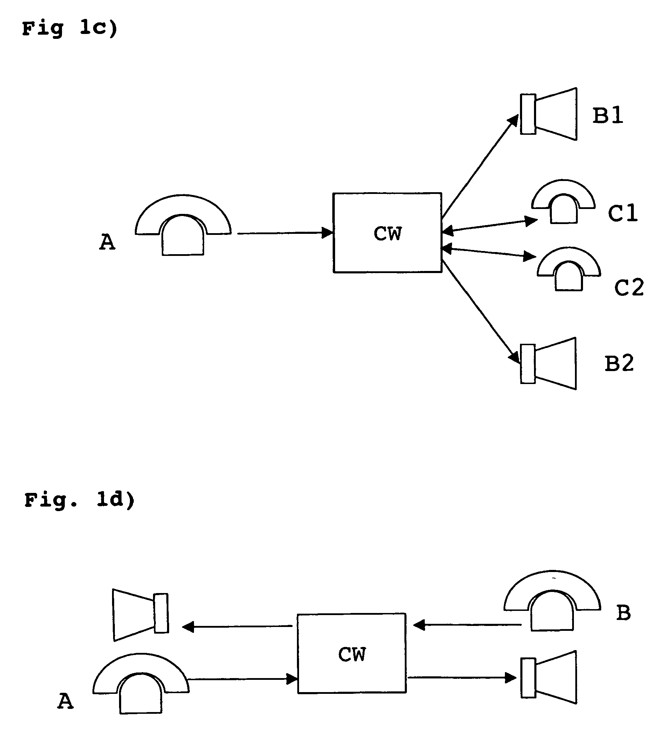

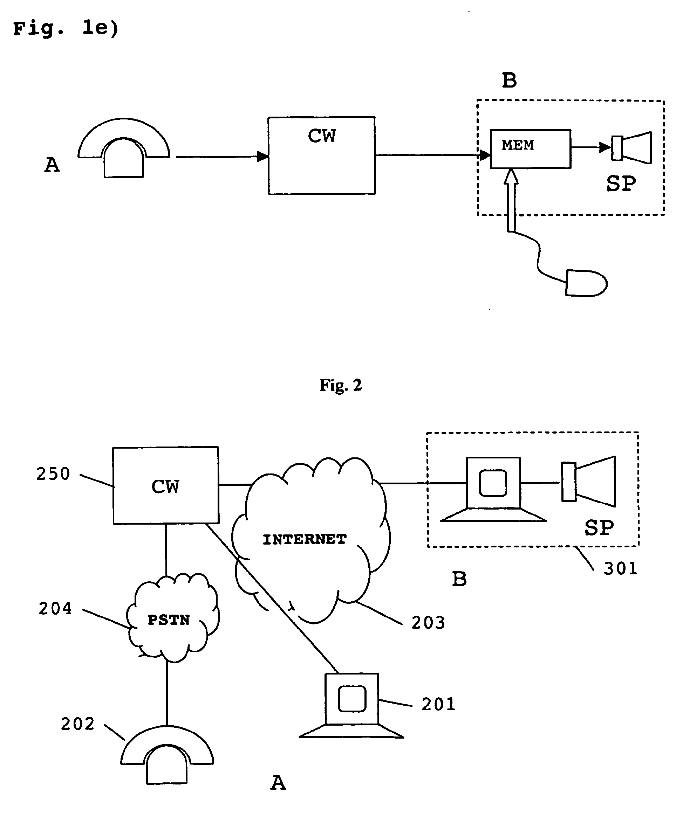

- Fig. 1: illustrates a set of different scenarios in which the invention is preferably used, namely:
a) an instant and automatic voice output at the terminal of the called B party,
b) simultaneous output at several B party terminals (interphone),
c) during a conference call output to at least one B party just listening to but not participating in that conference call,
d) bi-directional communication with instant output at the loudspeaker of the A and B terminals;
e) a voice output at the terminal of the called B party triggered by the detection of the presence of B;
- Fig. 2: illustrates a preferred architecture of a communications environment comprising a telecommunications website (TCW);
- Fig. 3a): illustrates a TCW based connection between a PSTN terminal and a PC for interoperational use at the place of the user A;
- Fig. 3b): illustrates an example where a user uses his telephone head set to privately listen to music that is being played back on his PC.

### Description of the preferred embodiments

Figure 1 details different possible applications of the present invention in figures 1 a through 1 e.

In Figure 1a) one can see the simplest application. A user A has a telephone, which is connected via a telecommunications network such as a standard PSTN-network or a mobile telephone network to a communications web site (CW). The communications web site (CW) is a personalised web site uniquely associated to the user A. It allows A to communicate in various ways, e.g. via e-mail, telephone, SMS, MMS, etc.. In particular, the CW of A allows him to send instant voice messages to other users. The CW represents an interface between the telecommunications network and a separate data network. A user B is connected to the data network via his Personal Computer (PC). B's PC has an integrated audio device, more specifically a loudspeaker (SP). Instead of a loudspeaker B may also use a headset or headphones.

In the situation depicted in figure 1a) user A with the telephone wishes to deliver a short instant and automatic audio message to user B who sits at his PC having a loudspeaker SP. B may be for instance using his PC to listen to some music or to watch a movie or to do some work. To deliver his message, A speaks the message into his telephone receiver and asks his CW to send the message to B. A's voice signal is routed from its telephone towards the communications web site (CW), which converts the signal into digital voice data (e.g. a VoIP data stream) and feeds it into the data network. The PC of user B is connected to the data network and receives the voice data sent by the CW. The voice data is then processed by a program running on the PC such as e.g. a web browser and instantly and automatically delivered to user B. An example of a situation in which this application may be used: The calling party A (Andrew) wants to make B (Betty) aware of the fact that A is online and just editing some documents on his personal website Com.Win (CW). To do this, A picks up his telephone receiver and says: "Hi Betty - this is Andrew speaking - I am now online - would you just visit my website - or pick up the phone". A's message is picked up by his telephone receiver and sent to the CW. The CW converts the message and transmits it to B's PC. As soon as the voice stream is received at the PC of B the voice message is then automatically outputted. A's voice message may e.g. be delivered while B is listening to some music on his PC. Then, the PC would automatically interrupt the music and the music player software would play A's voice message resuming the music playback afterwards.

The application that has just been described is especially useful in contexts where a user simply wishes to quickly attract the attention of another user. With this application short and important information can be quickly and directly delivered to the recipient. Furthermore, since the information is not delivered visually but aurally, the attention of the user is more easily attracted. Indeed, a visual message may be overlooked because it does not appear in the field of vision of the recipient. In contrast, an aural message as in the described application will be more likely to be perceived since aural perception is not restricted to a certain spatial field.

Figure 1b) shows a further application of the invention. This case is similar to the one exemplified in Figure 1a) except for the fact that this time there are several called parties B1 to Bi. The voice signal generated by A via its telephone is instantly outputted to all of these parties at the same time instead to a single party. This application may be used in the following "Interphone" scenario: It is 9:55 a.m. The boss A wants to remind his team B1, B2, Bi of the appointment at 10 a.m.. He picks up his phone and sends an instant voice message to his team members: "Hi everybody - Please do not miss our meeting at 10 See you"

Figure 1c) shows an application of the invention in the context of a duplex conference call. User A is having a telephone conference with two users C1 and C2. The telephone conference is controlled via the communications website CW. Besides the users C1 and C2, there two other users B1 and B2. B1 and B2 both have a PC with a loudspeaker. B1 and B2 do not participate in the conference call. However, using the CW, A may allow the users B1 and B2 to passively listen to the conference by sending them to their PCs an instant voice output ("just listen") of the conference. In this way the calling party A may allow other individuals that do not participate to the conference to directly and automatically listen to the conference in real-time. An example: A who is a lawyer is having a conference call with clients C1 and C2. He wants to let his colleagues B1 and B2 just listen to that conference without making any notice to C1 and C2.

In Figure 1d) one can see a bi-directional communication (Bi-Com) scenario. The two users A and B each have a telephone and a PC with a loudspeaker. In this configuration both A and B are are using their telephone and the CW in the way as described in the context of figure 1a). A sends an instant voice message to B in order to talk him and B sends an instant voice message to A in order to reply. In such a way A and B can have a normal real-time conversation by exchanging instant voice messages.

Finally, in Figure 1e) there is shown an application, which is identical to the one of figure 1a) except that the voice message is not instantly outputted to B. Instead the message is first simply stored in a memory MEM of B's PC. The voice message is delivered as soon as the PC of B detects B's presence. In this way one can make sure that the voice message is only outputted by the loud speakers of B's PC when B is there to listen to the message. The presence detection can be achieved by checking the mouse or keyboard activity of B's terminal. Naturally, the detection could also be performed with the help of various sensors that are connected to B's PC. Preferably, the message is first outputted immediately and repeated once the presence of B was detected.

Figure 2 shows a possible configuration of the communications environment of the present invention. A telephone 202 associated to user A is connected to a PSTN network 204. The PSTN network 204 is interfaced with the Internet (the data network) 203 via a communications website 250. CW acts as a gateway between the PSTN network 204 and the Internet 203. A PC terminal 301 associated to user B with a loudspeaker SP is connected as a client to the Internet 203. A further PC terminal 201 belonging to user A is connected to the Internet 203 and the communications website 250.

In order to send an instant voice message to B, A contacts the CW via its PC and asks the CW to initiate the voice message transfer. He then speaks his message into his telephone receiver. The according voice signal generated by the telephone reaches the CW and is converted into digital voice data. The voice data is then sent via the Internet to the PC terminal 301 owned by B. Finally, the voice data is processed by the terminal 301 and automatically and instantly outputted via the loudspeaker SP.

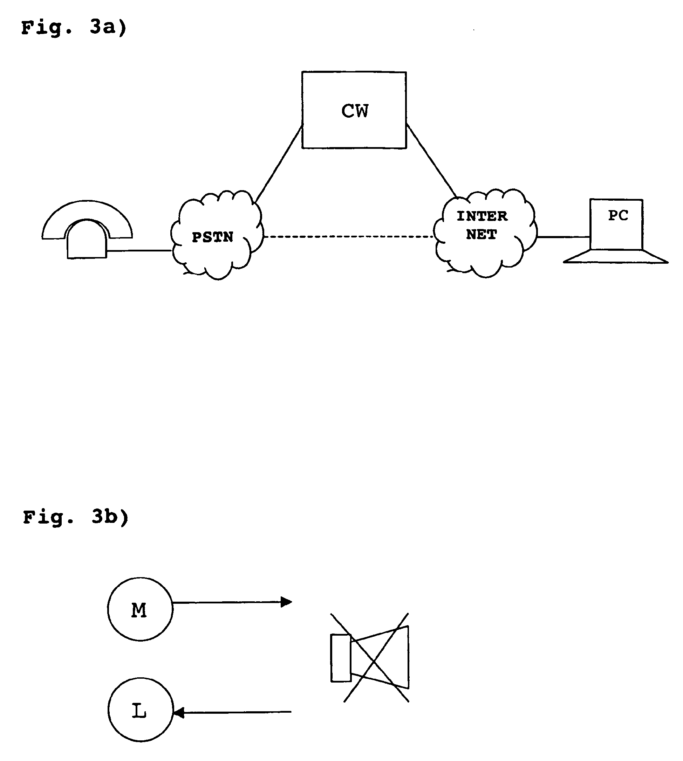

Fig. 3a) shows how, thanks to the present invention, a telephone may be used as an audio input or audio output for a PC. To achieve this, one needs a connection between the phone and the PC. This happens with the help of a telecommunications web site CW, which again serves as a gateway between the PSTN and the Internet. Then, instead of using a microphone and a loud speaker the user uses his phone to record voice data onto its PC or to playback recorded voice data from its PC. To record the user simply speaks into his phone. The voice signal is then sent through the PSTN-network to the CW, transferred into the Internet, routed to the PC and finally stored at the PC in a desired audio format. Music that is being played back from the PC to the telephone simply follows the opposite route. The user may thus use his phone together with his PC as a dictation device or a message recorder. He may even use his phone to control his PC with his voice.

Figure 3b) is an example in which a user plays back music stored on his PC through his headset instead of through the loudspeakers of his PC. The music (M) that is aimed at the loudspeaker is not delivered to the speaker because the speaker is switched off. Instead, the music (M) is rerouted as "private sound" to the telephone head set of the user. The user may then privately listen (L) to the music M via his headset.

### Reference numerals and abbreviations list

- 201: Personal Computer terminal
- 202: Telephone
- 203: Internet
- 204: Public switching telephone network
- 250: Communications website
- 301: Personal Computer terminal
- CW: Communications Website
- MEM: Memory
- PC: Personal Computer
- POTS: Plain Old Telephone System
- PSTN: Public Switching Telephone Network
- SP: Speaker
- TCW: Telecommunications Website

## Claims

1. A communications system comprising:
a telecommunications network (204) for providing at least voice telecom service to a first end user unit (202) associated to a calling party (A);
a data network (203) for providing at least voice data service for end user data terminals (201, 301), of which at least one constitutes a second end user unit (301) associated to a called party (B);
an interworking means (CW) having gateway functions for inter-connecting said networks (203, 204) and having controlling functions for controlling at least voice communication from said first end user unit (202) to said second end user unit (203), wherein a voice signal sent from the first end user unit (202) is converted into and transmitted as voice data to the second end user unit (301),
the second end user unit (301) having data processing means for receiving and automatically as well as instantly outputting said voice data at an audio device (SP) of that unit (301),
**characterized in that**
the system is adapted to detect at the second end user unit (301) a second user and that the second end user unit (301) is adapted to repeat the output of the voice data at the second end user unit (301) when the second user is detected by the second end user unit (301) and
that the repetition is predetermined by a first end user being the calling party (A) and/or by the second end user being the called party (B).

2. A communications system as recited in claim 1, further **characterized in that**
the system is adapted to detect the second user through his usage of the second end user unit (301), in particular through moving the mouse-cursor or striking the keyboard at the second end user unit (301).

3. A communications system as recited in claim 1, further **characterized in that**
the system is adapted to detect the second user at the second end user unit (301) via at least one sensor, in particular via a temperature sensors, a movement sensor, a light sensor and/or a camera.

4. A communications system as recited in claim 1, further **characterized in that**
the interworking means comprises a telecommunications website (CW) being configured for providing the communications, upon accessing of the web site by the calling party (A),
the calling party (A) having access to a terminal (201) being connected to said website (CW).

5. A communications system as recited in claim 1, further **characterized in that**
the data network is an Internet protocol based data network (203), in particular a public and/or IP network, a LAN, WAN or WLAN.

6. A communications system as recited in claim 1, further **characterized in that**
the second end user unit is a client of the data network (203) having an audio device.

7. A communications system as recited in claim 6, further **characterized in that**
the client of the data network (203) is a personal computer (PC) or a data terminal, and that the audio device is a loudspeaker (SP) or an audio port.

8. A communications system as recited in claim 1, further **characterized in that**
the voice signal is converted into a VoIP data stream or is integrated into a multimedia data stream and is transmitted to the second end user unit (301).

9. A communications system as recited in claim 6 or 8, further **characterized in that**
the client and/or the second end user unit (301) is adapted to process a software program or application, which instantly presents the content of the VoiP or multimedia data stream to the called party (B).

10. A communications system as recited in claim 9, further **characterized in that**
the program being processed by the client (301) for instantly outputting said content is a web browser or a part thereof or a communications software or a screen saver program.

11. A communications system as recited in claim 1, further **characterized in that**
the telecommunications network (204) is adapted for the provision of an instant voice output service, which service is accessible by calling an associated service number, the processing of the service being controlled by the interworking means (CW) for outputting the corresponding voice data instantly at the second end user unit (301).

12. A communications system as recited in claim 1, further **characterized in that**
the second end user unit (301) is a plurality of second end user units being associated to a plurality of corresponding called parties (B1, B2, ... Bi).

13. A communications system as recited in claim 1, further **characterized in that**
said voice signal from said first end user unit (202) is a telephone conversation with a third party or a duplex telephone conference with several third parties.

14. A communications system as recited in claim 13, further **characterized in that**
the interworking means (CW) is transmitting to the at least one second end user unit of the at least one corresponding party (B1, B2, ..., Bi) voice data which is corresponding to all voice signals or data being communicated within the conference call between the corresponding parties (A, C1, C2).

15. A communications system as recited in claim 1, further **characterized in that**
both end users (A, B) having units being connected to the telecommunications network (204) and having data terminals being connected to the data network (203),
the interworking means (CW) controls a bi-directional communication **in that** voice from the first user (A) is instantly outputted at the terminal of the second user (B) and vice versa.

16. A communications system as recited in claim 1, further **characterized in that**
the first end user unit is a PSTN end user unit being represented by a telephone device (POTS) and being associated to the calling party (A);
and wherein an end user IP network terminal (PC) is also associated to the calling party (A); and wherein the voice signal sent from the first end user unit (POTS, 202) of the calling party (A) is converted into and transmitted as voice data to his/her IP network terminal (PC) and processed there instead of being output at the second end user unit (301) of the called party (B).

17. A communications system as recited in claim 1, further **characterized in that**
the first end user unit is a PSTN end user unit being represented by a telephone device (POTS) and being associated to the calling party (A);
and wherein an end user IP network terminal (PC) is also associated to the calling party (A); and wherein the voice signal sent from the first end user unit (POTS, 202) of the calling party (A) is converted into and transmitted as voice data to his/her IP network terminal (PC) and processed there in addition to being output at the second end user unit (301) of the called party (B).

18. Interworking means (CW) for use in a communications system, the system comprising:
a telecommunications network (204) for providing at least voice telecom service to a first end user unit (202) associated to a calling party (A);
a data network (203) for providing at least voice data service for end user data terminals (201, 301), of which at least one constitutes a second end user unit (301) associated to a called party (B);
the interworking means (CW) having gateway functions for inter-connecting said networks (203, 204) and having controlling functions for controlling at least voice communication from said first end user unit (202) to said second end user unit (203), wherein a voice signal sent from the first end user unit (202) is converted into and
transmitted as voice data to the second end user unit (301),
the second end user unit (301) having data processing means for receiving and automatically outputting said voice data at an audio device (SP) of that unit (301),
**characterized in that**
the system is adapted to detect at the second end user unit (301) a second user; that second end user unit (301) is adapted to repeat the output of the voice data at the second end user unit (301) when the second user is detected by the second end user unit (301); and that the repetition is predetermined by a first end user being the calling partly (A) and/or by the second end user being the called party (B);
and that the interworking means comprises a telecommunications website (CW) being configured for providing the communications, upon accessing of the web site by the calling party (A),
the calling party (A) having access to a terminal (201) being connected to said website (CW).

19. An end user unit being a second end user unit (301) for use for a second user in a communications system, the system comprising:
a telecommunications network (204) for providing at least voice telecom service to a first end user unit (202) associated to a first end user being a calling party (A); a data network (203) for providing at least voice data service for end user data terminals (201, 301), of which at least one constitutes a second end user unit (301) associated to the second end user being a called party (B);
an interworking means (CW) having gateway functions for inter-connecting said networks (203, 204) and having controlling functions for controlling at least voice communication from said first end user unit (202) to said second end user unit (203), wherein a voice signal sent from the first end user unit (202) is converted into and transmitted as voice data to the second end user unit (301),
the second end user unit (301) having data processing means for receiving and automatically outputting said voice data at an audio device (SP) of that unit (301),
**characterized in that**
the system is adapted to detect at the second end user unit (301) a second user; and that second end user unit (301) is adapted to repeat the output of the voice data at the second end user unit (301) when the second user is detected by the second end user unit (301) and that the repetition is predetermined by a first end user being the calling party (A) and/or by the second end user being the called party (8).

20. A Method of transmitting voice signals from a first end user unit associated to a first user as sender connected to a PSTN-network to a second end user unit associated to a second user as receiving party connected to a data network comprising the steps of
receiving the voice signal of the first user by a first end user unit;
converting the voice signal to a voice data stream; sending the voice data stream to the second end user unit of the second user;
initiating the output of the voice data at the second end user unit, automatically as well as instantly,
**characterized in that**
the output of the voice data at the second end user unit of the second user is repeated when the second user is detected by the second end user unit and
the repetition is predetermined by the first end user being the calling party (A) and/or by the second end user being the called party (B).

## Patentansprüche

1. Kommunikationssystem, umfassend:
ein Telekommunikationsnetzwerk (204) zum Bereitstellen mindestens eines Sprach-Telekomdienstes an eine erste Endnutzereinheit (202), die mit einem anrufenden Teilnehmer (A) verbunden ist;
ein Datennetzwerk (203) zum Bereitstellen mindestens eines Sprachdatendienstes für Endnutzerdatenendgeräte (201, 301), von welchen mindestens eines eine zweite Endnutzereinheit (301) bildet, die mit einem angerufenen Teilnehmer (B) verbunden ist;
ein Netzanpassungsmittel (CW), welches Gateway-Funktionen zur Zwischenverbindung der Netzwerke (203, 204) aufweist, und welches Steuerungsfunktionen zum Steuern mindestens einer Sprachkommunikation von der ersten Endnutzereinheit (202) an die zweite Endnutzereinheit (203) aufweist, wobei ein Sprachsignal, welches von der ersten Endnutzereinheit (202) gesendet wird, in Sprachdaten konvertiert und als solche an die zweite Endnutzereinheit (301) übertragen wird, wobei die zweite Endnutzereinheit (301) Datenverarbeitungsmittel zum Empfangen und zum automatischen wie auch sofortigen Ausgeben der Sprachdaten an eine Audiovorrichtung (SP) dieser Einheit (301) aufweist, **dadurch gekennzeichnet, dass** das System eingerichtet ist, um bei der zweiten Endnutzereinheit (301) einen zweiten Nutzer zu erfassen;
und dass die zweite Endnutzereinheit (301) eingerichtet ist, die Ausgabe der Sprachdaten bei der zweiten Endnutzereinheit (301) zu wiederholen, wenn der zweite Nutzer durch die zweite Endnutzereinheit (301) erfasst wird, und dass die Wiederholung durch einen ersten Endnutzer, welcher der anrufende Teilnehmer (A) ist, und/oder durch den zweiten Endnutzer, der der angerufene Teilnehmer (B) ist, vorherbestimmt wird.

2. Kommunikationssystem gemäß Anspruch 1, **dadurch gekennzeichnet, dass** das System eingerichtet ist, um den zweiten Nutzer durch seine Verwendung der zweiten Endnutzereinheit (301) zu erfassen, insbesondere durch Bewegung des Maus-Cursors oder Berühren der Tastatur bei der zweiten Endnutzereinheit (301).

3. Kommunikationssystem gemäß Anspruch 1, **dadurch gekennzeichnet, dass** das System eingerichtet ist, um den zweiten Nutzer bei der zweiten Endnutzereinheit (301) mittels mindestens eines Sensors, insbesondere eines Temperatursensors, eines Bewegungssensors, eines Lichtsensors und/oder einer Kamera zu erfassen.

4. Kommunikationssystem gemäß Anspruch 1, **dadurch gekennzeichnet, dass** das Netzanpassungsmittel eine Telekommunikations-Webseite (CW) umfasst, die zum Bereitstellen der Kommunikationen beim Zugreifen auf die Webseite durch den anrufenden Teilnehmer (A) konfiguriert ist, wobei der anrufende Teilnehmer (A) Zugriff zu einem Endgerät (201) hat, welches mit der Webseite (CW) verbunden ist.

5. Kommunikationssystem gemäß Anspruch 1, **dadurch gekennzeichnet, dass** das Datennetzwerk ein Internetprotokoll-basiertes Datennetzwerk (203) ist, insbesondere ein öffentliches und/oder IP-Netzwerk, ein LAN, WAN oder WLAN.

6. Kommunikationssystem gemäß Anspruch 1, **dadurch gekennzeichnet, dass** die zweite Endnutzereinheit ein Client des Datennetzwerkes (203) ist, der eine Audiovorrichtung aufweist.

7. Kommunikationssystem gemäß Anspruch 6, **dadurch gekennzeichnet, dass** der Client des Datennetzwerkes (203) ein Personalcomputer (PC) oder ein Datenendgerät ist, und dass die Audiovorrichtung ein Lautsprecher (SP) oder ein Audio-Anschluss ist.

8. Kommunikationssystem gemäß Anspruch 1, **dadurch gekennzeichnet, dass** das Sprachsignal in einen VoIP-Daten-Stream konvertiert wird oder in einen Multimedia-Daten-Stream integriert wird und an die zweite Endnutzereinheit (301) übertragen wird.

9. Kommunikationssystem gemäß Anspruch 6 oder 8, **dadurch gekennzeichnet, dass** der Client und/oder die zweite Endnutzereinheit (301) eingerichtet ist, um ein Software-Programm oder eine Anwendung auszuführen, die sofort den Inhalt des VoIP- oder Multimedia-Daten-Streams dem angerufenen Teilnehmer (B) anzeigt.

10. Kommunikationssystem gemäß Anspruch 9, **dadurch gekennzeichnet, dass** das Programm, welches durch den Client (301) zum sofortigen Ausgeben des Inhalts ausgeführt wird, ein Web-Browser oder ein Teil davon oder eine Kommunikationssoftware oder ein Bildschirmschoner-Programm ist.

11. Kommunikationssystem gemäß Anspruch 1, **dadurch gekennzeichnet, dass** das Telekommunikationsnetzwerk (204) für die Bereitstellung eines sofortigen Sprachausgabedienstes eingerichtet ist, wobei der Dienst durch Anrufen einer verknüpften Servicenummer zugänglich ist, wobei das Verarbeiten des Dienstes durch das Netzanpassungsmittel (CW) zum sofortigen Ausgeben der entsprechenden Sprachdaten bei der zweiten Endnutzereinheit (301) gesteuert wird.

12. Kommunikationssystem gemäß Anspruch 1, **dadurch gekennzeichnet, dass** die zweite Endnutzereinheit (301) eine Vielzahl von zweiten Endnutzereinheiten ist, die mit einer Vielzahl entsprechender anrufender Teilnehmer (B1, B2, ... Bi) verbunden ist.

13. Kommunikationssystem gemäß Anspruch 1, **dadurch gekennzeichnet, dass** das Sprachsignal von der ersten Endnutzereinheit (202) ein Telefongespräch mit einem dritten Teilnehmer oder eine Duplex-Telefonkonferenz mit mehreren dritten Teilnehmern ist.

14. Kommunikationssystem gemäß Anspruch 13, **dadurch gekennzeichnet, dass** das Netzanpassungsmittel (CW) an die mindestens eine zweite Endnutzereinheit des mindestens einen entsprechenden Teilnehmers (B1, B2, ... Bi) Sprachdaten überträgt, die allen Sprachsignalen oder Daten entsprechen, die innerhalb des Konferenzanrufs zwischen den entsprechenden Teilnehmern (A, C1, C2) übermittelt werden.

15. Kommunikationssystem gemäß Anspruch 1,**dadurch gekennzeichnet, dass** beide Endnutzer (A, B) Einheiten aufweisen, die mit dem Telekommunikationsnetzwerk (204) verbunden sind, und Datenendgeräte aufweisen, die mit dem Datennetzwerk (203) verbunden sind, wobei das Netzanpassungsmittel (CW) eine bi-direktionale Kommunikation steuert, bei welcher Sprache von dem ersten Nutzer (A) sofort an das Endgerät des zweiten Nutzers (B) und umgekehrt ausgegeben wird.

16. Kommunikationssystem gemäß Anspruch 1, **dadurch gekennzeichnet, dass** die erste Endnutzereinheit eine PSTN-Endnutzereinheit ist, die durch eine Telefonvorrichtung (POTS) dargestellt wird und mit dem anrufenden Teilnehmer (A) verbunden ist;
und wobei ein Endnutzer-IP-Netzwerkendgerät (PC) auch mit dem anrufenden Teilnehmer (A) verbunden ist;
und wobei das Sprachsignal, welches von der ersten Endnutzereinheit (POTS, 202) des anrufenden Teilnehmers (A) gesendet wird, in Sprachdaten konvertiert und als solche an sein/ihr IP-Netzwerkendgerät (PC) übertragen und dort ausgeführt wird, anstatt bei der zweiten Endnutzereinheit (301) des angerufenen Teilnehmers (B) ausgegeben zu werden.

17. Kommunikationssystem gemäß Anspruch 1, **dadurch gekennzeichnet, dass** die erste Endnutzereinheit eine PSTN-Endnutzereinheit ist, die durch eine Telefonvorrichtung (POTS) dargestellt wird und mit dem anrufenden Teilnehmer (A) verbunden ist;
und wobei ein Endnutzer-IP-Netzwerkendgerät (PC) auch mit dem anrufenden Teilnehmer (A) verbunden ist;
und wobei das Sprachsignal, welches von der ersten Endnutzereinheit (POTS, 202) des anrufenden Teilnehmers (A) gesendet wird, in Sprachdaten umgewandelt wird und als solche zu seinem/ihrem IP-Netzwerkendgerät (PC) übertragen und dort, zusätzlich zum Ausgeben bei der zweiten Endnutzereinheit (301) des angerufenen Teilnehmers (B), verarbeitet wird.

18. Netzanpassungsmittel (CW) zur Verwendung in einem Kommunikationssystem, wobei das System umfasst:
ein Telekommunikationsnetzwerk (204) zum Bereitstellen mindestens eines Sprach-Telekomdienstes an eine erste Endnutzereinheit (202), die mit einem anrufenden Teilnehmer (A) verbunden ist;
ein Datennetzwerk (203) zum Bereistellen mindestens eines Sprachdatendienstes für Endnutzerdatenendgeräte (201, 301), von welchen mindestens eines eine zweite Endnutzereinheit (301) bildet, die mit einem angerufenen Teilnehmer (B) verbunden ist;
wobei das Netzanpassungsmittel (CW) Gateway-Funktionen zur Zwischenverbindung der Netzwerke (203, 204) aufweist und Steuerungsfunktionen zum Steuern mindestens einer Sprachkommunikation von der ersten Endnutzereinheit (202) an die zweite Endnutzereinheit (203) aufweist, wobei ein Sprachsignal, welches von der ersten Endnutzereinheit (202) gesendet wird, in Sprachdaten konvertiert und als solche an die zweite Endnutzereinheit (301) übertragen wird, wobei die zweite Endnutzereinheit (301) ein Datenverarbeitungsmittel zum Empfangen und automatischen Ausgeben der Sprachdaten bei einer Audio-Vorrichtung (SP) dieser Einheit (301) aufweist,
**dadurch gekennzeichnet, dass** das System eingerichtet ist, um bei der zweiten Endnutzereinheit (301) einen zweiten Nutzer zu erfassen;
dass die zweite Endnutzereinheit (301) eingerichtet ist, um die Ausgabe der Sprachdaten bei der zweiten Endnutzereinheit (301) zu wiederholen, wenn der zweite Nutzer durch die zweite Endnutzereinheit (301) erfasst wird;
und dass die Wiederholung durch einen ersten Endnutzer, der der anrufende Teilnehmer (A) ist, und/oder durch den zweiten Endnutzer, der der angerufene Teilnehmer (B) ist, vorherbestimmt wird;
und dass das Netzanpassungsmittel eine Telekommunikations-Webseite (CW) umfasst, die eingerichtet ist, um die Kommunikationen beim Zugreifen durch den anrufenden Teilnehmer (A) auf die Webseite bereitzustellen, wobei der anrufende Teilnehmer (A) Zugriff zu einem Endgerät (201) aufweist, welches mit der Webseite (CW) verbunden ist.

19. Endnutzereinheit, die eine zweite Endnutzereinheit (301) für die Verwendung für einen zweiten Nutzer in einem Kommunikationssystem ist, wobei das System umfasst:
ein Telekommunikationsnetzwerk (204) zum Bereitstellen mindestens eines Sprach-Telekomdienstes an eine erste Endnutzereinheit (202), die mit einem ersten Endnutzer, der ein anrufender Teilnehmer (A) ist, verbunden ist;
ein Datennetzwerk (203) zum Bereitstellen mindestens eines Sprachdatendienstes für Endnutzerdatenendgeräte (201, 301), von welchen mindestens eines eine zweite Endnutzereinheit (301) bildet, die mit dem zweiten Endnutzer verbunden ist, der ein angerufener Teilnehmer (B) ist;
ein Netzanpassungsmittel (CW), welches Gateway-Funktionen zum Zwischenverbinden der Netzwerke (203, 204) aufweist, und Steuerungsfunktionen zum Steuern mindestens einer Sprachkommunikation von der ersten Endnutzereinheit (202) an die zweite Endnutzereinheit (203) aufweist, wobei ein Sprachsignal, welches von der ersten Endnutzereinheit (202) gesendet wird, in Sprachdaten konvertiert und als solche an die zweite Endnutzereinheit (301) übertragen wird, wobei die zweite Endnutzereinheit (301) Datenverarbeitungsmittel zum Empfangen und automatischen Ausgeben der Sprachdaten bei einer Audiovorrichtung (SP) dieser Einheit (301) aufweist,
**dadurch gekennzeichnet, dass** das System eingerichtet ist, um bei der zweiten Endnutzereinheit (301) einen zweiten Nutzer zu erfassen;
und dass die zweite Endnutzereinheit (301) eingerichtet ist, die Ausgabe der Sprachdaten bei der zweiten Endnutzereinheit (301) zu wiederholen, wenn der zweite Nutzer durch die zweite Endnutzereinheit (301) erfasst wird, und dass die Wiederholung durch einen ersten Endnutzer, der der anrufende Teilnehmer (A) ist, und/oder durch den zweiten Endnutzer, der der angerufene Teilnehmer (B) ist, vorherbestimmt wird.

20. Verfahren zum Übertragen von Sprachsignalen von einer ersten Endnutzereinheit, die mit einem ersten Nutzer als Sender verbunden ist, der mit einem PSTN-Netzwerk verbunden ist, an eine zweite Endnutzereinheit, die mit einem zweiten Nutzer als empfangender Teilnehmer verbunden ist, der mit einem Datennetzwerk verbunden ist, umfassend die Schritte:
Empfangen des Sprachsignals von dem ersten Nutzer durch eine erste Endnutzereinheit;
Konvertieren des Sprachsignals in einen Sprach-Daten-Stream;
Senden des Sprach-Daten-Streams an die zweite Endnutzereinheit des zweiten Nutzers;
automatisches wie auch sofortiges Veranlassen der Ausgabe der Sprachdaten bei der zweiten Endnutzereinheit,
**dadurch gekennzeichnet, dass**
die Ausgabe der Sprachdaten bei der zweiten Endnutzereinheit des zweiten Nutzers wiederholt wird, wenn der zweite Nutzer durch die zweite Endnutzereinheit erfasst wird und die Wiederholung durch den ersten Endnutzer, der der anrufende Teilnehmer (A) ist, und/oder durch den zweiten Endnutzer, der der angerufene Teilnehmer (B) ist, vorherbestimmt wird.

## Revendications

1. Système de communication comprenant:
un réseau de télécommunication (204) pour fournir au moins un service de télécommunication vocale à une première unité d'utilisateur final (202) qui est associée à une partie appelante (A);
un réseau de données (203) pour fournir au moins un service de données vocales à des terminaux de données d'utilisateur final (201, 301), dont au moins un constitue une seconde unité d'utilisateur final (301) qui est associée à une partie appelée (B);
un moyen d'interfonctionnement (CW) disposant de fonctions de passerelle pour interconnecter lesdits réseaux (203, 204) et disposant de fonctions de commande pour commander au moins une communication vocale depuis ladite première unité d'utilisateur final (202) jusqu'à ladite seconde unité d'utilisateur final (203), dans lequel un signal vocal qui est envoyé depuis la première unité d'utilisateur final (202) est converti selon et est transmis en tant que données vocales à la seconde unité d'utilisateur final (301),
la seconde unité d'utilisateur final (301) disposant d'un moyen de traitement de données pour recevoir et pour émettre en sortie de manière automatique de même qu'instantanément lesdites données vocales au niveau d'un dispositif audio (SP) de cette unité (301),
**caractérisé en ce que**:
le système est adapté pour détecter au niveau de la seconde unité d'utilisateur final (301) un second utilisateur ; et
**en ce que** la seconde unité d'utilisateur final (301) est adaptée pour répéter la sortie des données vocales au niveau de la seconde unité d'utilisateur final (301) lorsque le second utilisateur est détecté par la seconde unité d'utilisateur final (301) et **en ce que** la répétition est prédéterminée par un premier utilisateur final qui est la partie appelante (A) et/ou par le second utilisateur final qui est la partie appelée (B).

2. Système de communication selon la revendication 1, **caractérisé en outre en ce que** le système est adapté pour détecter le second utilisateur par l'intermédiaire de son utilisation de la seconde unité d'utilisateur final (301), en particulier par l'intermédiaire du déplacement de la souris-du curseur ou par l'intermédiaire de la frappe du clavier au niveau de la seconde unité d'utilisateur final (301).

3. Système de communication selon la revendication 1,
**caractérisé en outre en ce que**:
le système est adapté pour détecter le second utilisateur au niveau de la seconde unité d'utilisateur final (301) via au moins un capteur, en particulier via un capteur de température, un capteur de déplacement, un capteur de lumière et/ou une caméra.

4. Système de communication selon la revendication 1,
**caractérisé en outre en ce que**:
le moyen d'interfonctionnement comprend un site web de télécommunication (CW) qui est configuré pour réaliser les communications, suite à un accès au site web par la partie appelante (A),
la partie appelante (A) disposant d'un accès à un terminal (201) qui est connecté audit site web (CW).

5. Système de communication selon la revendication 1, **caractérisé en outre en ce que** le réseau de données est un réseau de données basé sur protocole de l'Internet (203), en particulier un réseau public et/ou IP, un LAN, un WAN ou un WLAN.

6. Système de communication selon la revendication 1, **caractérisé en outre en ce que** la seconde unité d'utilisateur final est un client du réseau de données (203) disposant d'un dispositif audio.

7. Système de communication selon la revendication 6, **caractérisé en outre en ce que** le client du réseau de données (203) est un ordinateur personnel (PC) ou un terminal de données et **en ce que** le dispositif audio est un haut-parleur (SP) ou un port audio.

8. Système de communication selon la revendication 1, **caractérisé en outre en ce que** le signal vocal est converti selon un train de données VoIP ou est intégré dans un train de données multimédia et est transmis à la seconde unité d'utilisateur final (301).

9. Système de communication selon la revendication 6 ou 8, **caractérisé en outre en ce que** le client et/ou la seconde unité d'utilisateur final (301) est adaptée pour traiter un programme ou une application de logiciel, qui présente de manière instantanée le contenu du train de données VoIP ou multimédia à la partie appelée (B).

10. Système de communication selon la revendication 9, **caractérisé en outre en ce que** le programme qui est traité par le client (301) pour émettre en sortie instantanément ledit contenu est un navigateur web ou une partie afférente ou un logiciel de communication ou un programme économiseur d'écran.

11. Système de communication selon la revendication 1, **caractérisé en outre en ce que** le réseau de télécommunication (204) est adapté pour la fourniture d'un service de sortie vocale instantanée, lequel service est accessible en appelant un numéro de service associé, le traitement du service étant commandé par le moyen d'interfonctionnement (CW) pour émettre en sortie les données vocales correspondantes instantanément au niveau de la seconde unité d'utilisateur final (301).

12. Système de communication selon la revendication 1, **caractérisé en outre en ce que** la seconde unité d'utilisateur final (301) est constituée par une pluralité de secondes unités d'utilisateur final qui sont associées à une pluralité de parties appelées correspondantes (B1, B2,....., Bi).

13. Système de communication selon la revendication 1, **caractérisé en outre en ce que** ledit signal vocal en provenance de ladite première unité d'utilisateur final (202) est une conversation téléphonique avec une tierce partie ou une conférence téléphonique duplex avec plusieurs tierces parties.

14. Système de communication selon la revendication 13, **caractérisé en outre en ce que** le moyen d'interfonctionnement (CW) est en train d'émettre sur l'au moins une seconde unité d'utilisateur final de l'au moins une partie correspondante (B1, B2,..., Bi) des données vocales qui correspondent à tous les signaux vocaux ou des données qui sont communiquées à l'intérieur de l'appel de conférence entre les parties correspondantes (A, C1, C2).

15. Système de communication selon la revendication 1, **caractérisé en outre en ce que** les deux utilisateurs finals (A, B) disposant d'unités qui sont connectées au réseau de télécommunication (204) et disposant de terminaux de données qui sont connectés au réseau de données (203), le moyen d'interfonctionnement (CW) commande une communication bidirectionnelle consistant **en ce qu'**une voix en provenance du premier utilisateur (A) est émise en sortie instantanément au niveau du terminal du second utilisateur (B) et vice versa.

16. Système de communication selon la revendication 1, **caractérisé en outre en ce que** la première unité d'utilisateur final est une unité d'utilisateur final PSTN qui est représentée par un dispositif téléphonique (POTS) et qui est associée à la partie appelante (A); et dans lequel un terminal de réseau IP d'utilisateur final (PC) est également associé à la partie appelante (A); et dans lequel le signal vocal qui est envoyé depuis la première unité d'utilisateur final (POTS, 202) de la partie appelante (A) est converti selon et est transmis en tant que données vocales sur son terminal de réseau IP (PC) et est traité à ce niveau en lieu et place d'être émis en sortie au niveau de la seconde unité d'utilisateur final (301) de la partie appelée (B).

17. Système de communication selon la revendication 1, **caractérisé en outre en ce que** la première unité d'utilisateur final est une unité d'utilisateur final PSTN qui est représentée par un dispositif téléphonique (POTS) et qui est associée à la partie appelante (A); et dans lequel un terminal de réseau IP d'utilisateur final (PC) est également associé à la partie appelante (A) ; et dans lequel le signal vocal qui est envoyé depuis la première unité d'utilisateur final (POTS, 202) de la partie appelante (A) est converti selon et est transmis en tant que données vocales sur son terminal de réseau IP (PC) et est traité à ce niveau en plus d'être émis en sortie au niveau de la seconde unité d'utilisateur final (301) de la partie appelée (B).

18. Moyen d'interfonctionnement (CW) pour une utilisation dans un système de communication, le système comprenant:
un réseau de télécommunication (204) pour fournir au moins un service de télécommunication vocale à une première unité d'utilisateur final (202) qui est associée à une partie appelante (A);
un réseau de données (203) pour fournir au moins un service de données vocales à des terminaux de données d'utilisateur final (201, 301), dont au moins un constitue une seconde unité d'utilisateur final (301) qui est associée à une partie appelée (B);
le moyen d'interfonctionnement (CW) disposant de fonctions de passerelle pour interconnecter lesdits réseaux (203, 204) et disposant de fonctions de commande pour commander au moins une communication vocale depuis ladite première unité d'utilisateur final (202) jusqu'à ladite seconde unité d'utilisateur final (203), dans lequel un signal vocal qui est envoyé depuis la première unité d'utilisateur final (202) est converti selon et est transmis en tant que données vocales à la seconde unité d'utilisateur final (301),
la seconde unité d'utilisateur final (301) disposant d'un moyen de traitement de données pour recevoir et pour émettre en sortie de manière automatique lesdites données vocales au niveau d'un dispositif audio (SP) de cette unité (301),
**caractérisé en ce que**:
le système est adapté pour détecter au niveau de la seconde unité d'utilisateur final (301) un second utilisateur ; et
**en ce que** la seconde unité d'utilisateur final (301) est adaptée pour répéter la sortie des données vocales au niveau de la seconde unité d'utilisateur final (301) lorsque le second utilisateur est détecté par la seconde unité d'utilisateur final (301) et **en ce que** la répétition est prédéterminée par un premier utilisateur final qui est la partie appelante (A) et/ou par le second utilisateur final qui est la partie appelée (B);
et **en ce que** le moyen d'interfonctionnement comprend un site web de télécommunication (CW) qui est configuré pour réaliser les communications, suite à un accès au site web par la partie appelante (A),
la partie appelante (A) disposant d'un accès à un terminal (201) qui est connecté audit site web (CW).

19. Unité d'utilisateur final qui est une seconde unité d'utilisateur final (301) pour une utilisation pour un second utilisateur dans un système de communication, le système comprenant:
un réseau de télécommunication (204) pour fournir au moins un service de télécommunication vocale à une première unité d'utilisateur final (202) qui est associée à un premier utilisateur final qui est une partie appelante (A);
un réseau de données (203) pour fournir au moins un service de données vocales à des terminaux de données d'utilisateur final (201, 301), dont au moins un constitue une seconde unité d'utilisateur final (301) qui est associée au second utilisateur final qui est une partie appelée (B);
un moyen d'interfonctionnement (CW) disposant de fonctions de passerelle pour interconnecter lesdits réseaux (203, 204) et disposant de fonctions de commande pour commander au moins une communication vocale depuis ladite première unité d'utilisateur final (202) jusqu'à ladite seconde unité d'utilisateur final (203), dans lequel un signal vocal qui est envoyé depuis la première unité d'utilisateur final (202) est converti selon et est transmis en tant que données vocales à la seconde unité d'utilisateur final (301),
la seconde unité d'utilisateur final (301) disposant d'un moyen de traitement de données pour recevoir et pour émettre en sortie de manière automatique lesdites données vocales au niveau d'un dispositif audio (SP) de cette unité (301),
**caractérisé en ce que**:
le système est adapté pour détecter au niveau de la seconde unité d'utilisateur final (301) un second utilisateur; et
**en ce que** la seconde unité d'utilisateur final (301) est adaptée pour répéter la sortie des données vocales au niveau de la seconde unité d'utilisateur final (301) lorsque le second utilisateur est détecté par la seconde unité d'utilisateur final (301) et **en ce que** la répétition est prédéterminée par un premier utilisateur final qui est la partie appelante (A) et/ou par le second utilisateur final qui est la partie appelée (B).

20. Procédé de transmission de signaux vocaux depuis une première unité d'utilisateur final qui est associée à un premier utilisateur en tant qu'envoyeur qui est connecté à un réseau PSTN jusqu'à une seconde unité d'utilisateur final qui est associée à un second utilisateur en tant que partie de réception qui est connectée à un réseau de données, comprenant les étapes de:
réception du signal vocal du premier utilisateur au moyen d'une première unité d'utilisateur final;
conversion du signal vocal selon un train de données vocales;
envoi du train de données vocales sur la seconde unité d'utilisateur final du second utilisateur;
initiation de la sortie des données vocales au niveau de la seconde unité d'utilisateur final de manière automatique de même qu'instantanément,
**caractérisé en ce que**:
la sortie des données vocales au niveau de la seconde unité d'utilisateur final du second utilisateur est répétée lorsque le second utilisateur est détecté par la seconde unité d'utilisateur final et la répétition est prédéterminée par le premier utilisateur final qui est la partie appelante (A) et/ou par le second utilisateur final qui est la partie appelée (B).
